# EUROPÄISCHE PATENTANMELDUNG

(11) **EP 2 481 967 A2**
(43) Veröffentlichungstag der Anmeldung: **01.08.2012**
(21) Anmeldenummer: 12000097.1
(22) Anmeldetag: 10.01.2012
(51) Int. Cl.: F16M 13/02, F16M 11/04

(54) **Rasthalteelement für die reversible Befestigung von Bauteilen, insb. für die Wand- oder Deckenmontage von Bildwandsystemen**

(30) Priorität: 28.01.2011 DE 102011009734
(71) Anmelder: DDC Design & Development GmbH & Co. KG, 33175 Bad Lippspringe (DE)
(72) Erfinder: Czeczka, Andreas, 33100 Paderborn (DE)
(74) Vertreter: Schober, Mirko

(57) **Zusammenfassung**

Ein Rasthalteelement (11) für die reversible Befestigung von Bauteilen, insbesondere für die Wand- oder Deckenmontage von Bildwandsystemen (10), weist zwei Rastschieber (1) mit jeweils einer Riegellasche (1a) und mindestens ein Rückstellmittel (2) auf. Die Rastschieber (11) sind zwischen einer geöffneten und einer geschlossenen Stellung verschiebbar. Die Rastschieber (11) sind gegenläufig zueinander angeordnet. Ihre Bewegungen sind durch mindestens ein Kopplungselement (3, 4) miteinander gekoppelt. Durch eine Auslenkung eines Rastschiebers (1) über das mindestens eine Kopplungselement (3, 4) ist eine Auslenkung des anderen Rastschiebers (1) in entgegengesetzter Richtung bewirkbar. Durch die Auslenkungen sind Rückstellkräfte auf das mindestens eine Rückstellmittel (2) beaufschlagbar.

## Beschreibung

Die Erfindung betrifft ein Rasthalteelement für die reversible Befestigung von Bauteilen, insbesondere für die Wand-oder Deckenmontage von Bildwandsystemen nach dem Oberbegriff des Anspruchs 1 und ein Verfahren zur Montage von Bildwandsystemen nach Anspruch 12.

Nach dem Stand der Technik werden stationäre Bildwandsysteme in der Regel an der Decke oder an einer Wand mit speziellen Wand- oder Deckenträgern befestigt. Dabei müssen die Fixierungspunkte für die Befestigung der konfektionierten Bildwand an den Wand- oder Deckenträgern genau eingehalten werden. Außerdem müssen für die Befestigung oft mehrere Schrauben eingedreht werden, was sehr arbeitsintensiv und daher mit vergleichsweise hohen Kosten verbunden ist. Im Fall eines Defekts muss die defekte Bildwand mit allen Verschraubungen von den Wand- oder Deckenträgern zunächst gelöst werden, um anschließend die Verschraubungen bei der neuen Bildwand ein weiteres Mal durchführen zu müssen.

In der Druckschrift EP 1 816 513 A1 ist ein Klipp zum lösbaren Anbringen einer Komponente an eine Oberfläche offenbart, wobei die Komponente einen Kanal aufweist, in die der Klipp mit einem Arm und eine federbelastetes Schnappelement eingreift. Bei der Montage wird die Komponente zunächst auf den Arm gelegt und anschließend durch ein Verkippen in den Schnapper eingerastet.

Aufgrund des Schnappelements kann der Klipp aus EP 1 816 513 A1 nur für die Montage an einer der Seiten der anzubringenden Komponente eingesetzt werden. Im Falle einer Montage in einen auf der oberen Seite angeordneten Kanal kann die Komponente aus dem federbelasteten Schnappelement aufgrund seines Gewichts heraus kippen und damit hinunterfallen. Darüber hinaus ist der Klipp aufgrund zahlreicher Bestandteile sehr kompliziert aufgebaut und daher relativ aufwändig herzustellen.

Aufgabe der vorliegenden Erfindung ist es deshalb, ein Rasthalteelement verfügbar zu machen, welches sich für die Montage in vertikaler und in horizontaler Ausrichtung gleichzeitig eignet und welches aus wenigen Teilen besteht und daher preisgünstig herstellbar ist.

Gelöst wird diese Aufgabe durch ein Rasthalteelement für die reversible Befestigung von Bauteilen gemäß des Oberbegriffs von Anspruch 1 und durch ein Verfahren zur Montage von Bildwandsystemen nach Anspruch 12.

Anspruch 1 sieht ein Rasthalteelement für die reversible Befestigung von Bauteilen, insbesondere für die Wand- oder Deckenmontage von Bildwandsystemen vor, welches zwei Rastschieber mit jeweils einer Riegellasche und mindestens ein Rückstellmittel aufweist, wobei die Rastschieber zwischen einer geöffneten und einer geschlossenen Stellung verschiebbar sind, wobei die Rastschieber gegenläufig zueinander angeordnet sind und deren Bewegungen durch mindestens ein Kopplungselement miteinander gekoppelt sind, wobei durch eine Auslenkung eines Rastschiebers über das mindestens eine Kopplungselement eine Auslenkung des anderen Rastschiebers in entgegengesetzter Richtung bewirkbar ist und wobei durch die Auslenkungen Rückstellkräfte auf das mindestens eine Rückstellmittel beauf-schlagbar sind.

Ein erfindungsgemäßes Rasthalteelement hat den Vorteil einer Einsetzbarkeit für eine Deckenmontage und einer Wandmontage des zu montierenden Bauteils, wobei im Falle einer Deckenmontage die Gewichtskraft des montierten Bauteils auf allen Rastschiebern gleichmäßig verteilt sein kann, wenn das Bauteil eine gleichmäßige Gewichtsverteilung aufweist. Als weiterer Vorteil ist das Rasthalteelement nach der Erfindung relativ preiswert herzustellen, da nur wenige und einfach zu fertigende Bestandteile für das Rasthalteelement vorgesehen sind.

Vorteilhafte Ausgestaltungen und Weiterbildungen des Rasthalteelements für die reversible Befestigung von Bauteilen, insbesondere für die Wand- oder Deckenmontage von Bildwandsystemen ergeben sich aus den Unteransprüchen 2 bis 7.

Es kann vorgesehen sein, dass als Kopplungselemente Hebel mit Führung oder Zahnräder mit Zahnstangen vorgesehen sind, wobei Führung bzw. Zahnstangen an den Rastschiebern angeordnet sind und wobei vorzugsweise die Auslenkungen der Rastschieber gleich lang sind.

Hebel mit einer Führung oder Zahnräder mit Zahnstangen sind formschlüssig und damit präzise wirksame Anordnungen, welche die Auslenkungen der Rastschieber synchronisieren.

Es kann außerdem vorgesehen sein, dass die Rastschieber jeweils eine Führung für einen der Hebelarme bzw. eine Zahnstange aufweisen.

Durch Anordnung der Führung für einen der Hebelarme bzw. einer Zahnstange kann das jeweils verwendete Kopplungselement unmittelbar auf den Rastschieber wirken.

Es ist vorteilhaft, dass das Rasthalteelement ein Gehäuse aufweist, wobei vorzugsweise Hebel bzw. Zahnräder am Gehäuse drehbar gelagert angeordnet sind und insbesondere wobei das Gehäuse als Führung der Rastschieber vorgesehen ist.

Das Gehäuse schützt das Rasthalteelement, außerdem stellt es eine günstige Befestigungsmöglichkeit für vorzugsweise drehgelagerte Hebel oder Zahnräder dar.

Es ist auch vorteilhaft, dass die Rastschieber in der geschlossenen Stellung weiter beabstandet sind als in der geöffneten Stellung und dass die Rückstellmittel in der geöffneten Stellung der Rastschieber eine Spannung aufweisen und in der geschlossenen Stellung der Rastschieber zumindest größtenteils entspannt sind.

Ein Rasthalteelement mit ausgefahrenden Rastschiebern, die nur unter Krafteinwirkung eingedrückt werden können, kann auf Schienen oder in Führungen eingehängt werden.

Es ist ferner vorteilhaft, dass eine Arretierung der Rastschieber in der geschlossenen Stellung vorgesehen ist, wobei für die Arretierung der Rastschieber mindestens ein Befestigungsmittel, vorzugsweise eine Schraube vorgesehen ist.

Durch die zusätzliche Arretierung kann die hergestellte Verbindung vor unbeabsichtigtem Lösen geschützt werden.

Es kann darüber hinaus vorgesehen sein, dass die beiden Rastschieber gleich aufgebaut sind, wobei einer der Rastschieber um 180° gedreht zum anderen Rastschieber angeordnet ist.

Durch die Verwendung von gleichen Bauteilen können Herstellungskosten eingespart werden.

Weitere vorteilhafte Ausgestaltungen und Weiterbildungen des Rasthalteelements für die reversible Befestigung von Bauteilen im Zusammenhang mit einem Wand- oder/und Deckenträger ergeben sich aus den nebengeordneten Ansprüchen 8 und 9.

Demnach ist es besonders vorteilhaft, dass der Wand- oder/und Deckenträger mindestens ein Rasthalteelement nach einem der Ansprüche 1 bis 7 zur Montage eines Bildwandsystems durch Einrasten aufweist.

Durch vorkonfigurierte Wand- oder/und Deckenträger, wie beispielsweise Wand-/Deckenwinkel kann ein Bildwandsystem einfach an den Wand- oder/und Deckenträgern eingerastet werden, wobei die Riegellaschen in einem kleinen Bereich führend wirken.

Es ist ebenfalls besonders vorteilhaft, dass das Gehäuse des Rasthalteelements mit dem Wand- oder/und Deckenträger verschweißt, verschraubt oder durch Formschluss verbunden ist.

Durch Verschweißen oder Verschrauben des Gehäuses zur Aufnahme des Rasthalteelements mit dem Wand- oder/und Deckenträger wird eine preiswerte und für die Installation eines Bildwandsystems ausreichend stabile Verbindung verfügbar gemacht. Für einen Formschluss zwischen Wand- oder/und Deckenträger und Gehäuse des Rasthalteelements können beide Teile schon bei ihrer Fertigung entsprechend vorbereitet werden, was den Arbeitsschritt des Verschweißens bzw. des Verschraubens erübrigt.

Außerdem ergeben sich weitere vorteilhafte Ausgestaltungen und Weiterbildungen des Rasthalteelements für die reversible Befestigung von Bauteilen mit dem Wand- oder/und Deckenträger im Zusammenhang mit einem Bildwandsystem aus den nebengeordneten Ansprüchen 10 und 11.

Demnach ist es auch besonders vorteilhaft, dass das Bildwandsystem an mindestens einem Wand- oder/und Deckenträger nach Anspruch 8 oder 9 befestigt ist, wobei vorzugsweise am Bildwandsystem angeordnete Schienen oder Führungen für ein formschlüssiges Eingreifen der Riegellaschen der Rasthalteelemente vorgesehen sind.

Ein an einem mit Rasthalteelementen ausgestattetem Wand-oder/und Deckenträger eingerastetes Bildwandsystem ist schnell austauschbar.

Darüber hinaus ist es vorteilhaft, dass die Schienen oder Führungen in ein Gehäuse des Bildwandsystems integriert sind.

Integrierte Schienen sparen Material für das Gehäuse mit Schienen oder Führung ein und führen damit auch zu einem verringerten Gewicht des Gehäuses.

Nach Anspruch 12 ist ein Verfahren zur Montage eines Bildwandsystems nach einem der Ansprüche 10 oder 11 vorgesehen, mit den Schritten:
A. Wand- oder Deckenmontage von mindestens einem, vorzugsweise von zwei Wand- oder/und Deckenträgern,
B. Einrasten eines Bildwandsystems, welches am Gehäuse Schienen oder Führungen für ein Eingreifen der Riegellaschen der Rasthalteelemente aufweist, C. Arretieren der Rasthalteelemente durch ein Befestigungsmittel, welches die Rastschieber arretiert.
   Durch das Verfahren zur Montage eines Bildwandsystems wird eine einfache, schnelle und vor allem reversibel durchzuführende Montage eines Bildwandsystem möglich.

Weitere Eigenschaften, Merkmale und Vorteile der Erfindung werden nachfolgend anhand von Figuren von bevorzugten Ausführungsformen des Rasthalteelement für die reversible Befestigung von Bauteilen, insbesondere für die Wand- oder Deckenmontage von Bildwandsystemen nach Anspruch 1 und des Verfahrens zur Montage von Bildwandsystemen nach Anspruch 12 näher erläutert. Im Einzelnen zeigen
- Figur 1: eine schematische perspektivische Darstellung des Rasthalteelements nach einer ersten Ausführungsform der Erfindung von unten,
- Figur 2: eine schematische perspektivische Darstellung des Rasthalteelements nach der ersten Ausführungsform der Erfindung von oben,
- Figur 3: eine schematische Aufsicht von unten auf das Rasthalteelement nach der ersten Ausführungsform der Erfindung,
- Figur 4: eine schematische Explosionsdarstellung des Wand- oder/und Deckenträgers mit einem Rasthalteelement nach der ersten Ausführungsform der Erfindung von unten,
- Figur 5: eine schematische Explosionsdarstellung des Wand- oder/und Deckenträgers mit einem Rasthalteelement nach der ersten Ausführungsform der Erfindung von oben,
- Figur 6: eine schematische Darstellung von der Seite eines Rasthalteelements nach einer zweiten Ausführungsform der Erfindung,
- Figur 7: eine schematische perspektivische Darstellung des Rasthalteelements nach der zweiten Ausführungsform der Erfindung,
- Figur 8: eine schematische Explosionsdarstellung des Wand- oder/und Deckenträgers mit einem Rasthalteelement nach der zweiten Ausführungsform der Erfindung von unten,
- Figur 9: eine schematische Explosionsdarstellung des Wand- oder/und Deckenträgers mit einem Rasthalteelement nach der zweiten Ausführungsform der Erfindung von oben,
- Figur 10: eine schematische perspektivische Darstellung des Wand- oder/und Deckenträgers mit einem Rasthalteelement nach der zweiten Ausführungsform der Erfindung von oben,
- Figur 11: eine schematische Explosionsdarstellung des Wand- oder/und Deckenträgers mit einem Rasthalteelement nach einer dritten Ausführungsform der Erfindung von unten,
- Figur 12: eine schematische Explosionsdarstellung des Wand- oder/und Deckenträgers mit einem Rasthalteelement nach der dritten Ausführungsform der Erfindung von oben,
- Figur 13: eine schematische Seitenansicht eines Bildwandsystems mit Befestigung an einem Wand-oder/und Deckenträger mit einem Rasthalte-
- Figur 14: element nach der ersten Ausführungsform der Erfindung, eine schematische perspektivische Darstellung eines Bildwandsystems mit Befestigung an einem Wand- oder/und Deckenträger mit einem Rasthalteelement nach der ersten Ausführungsform der Erfindung.

Anhand der ausführlichen Beschreibung zu den Figuren werden Ausführungsformen der Erfindung beschrieben.

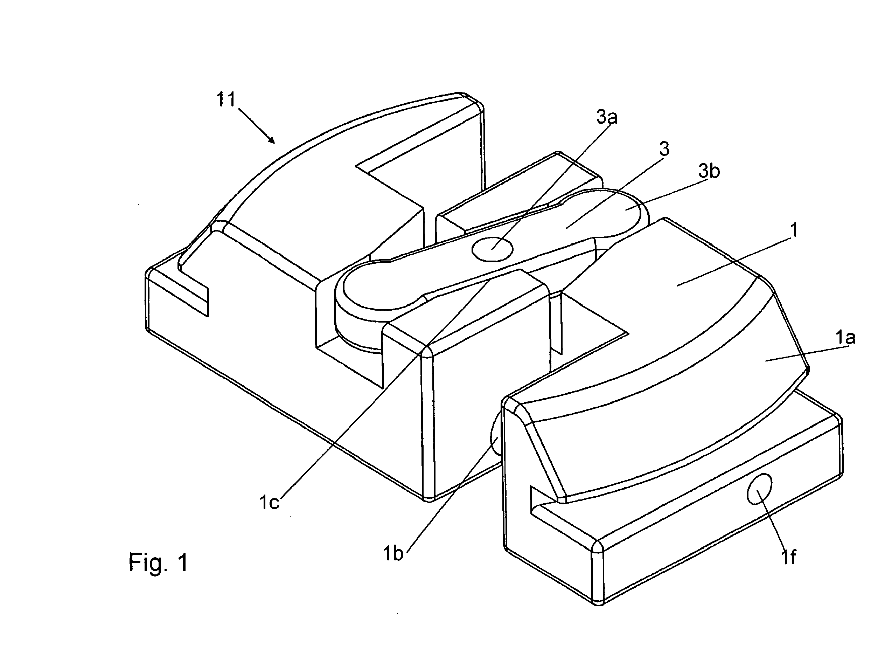

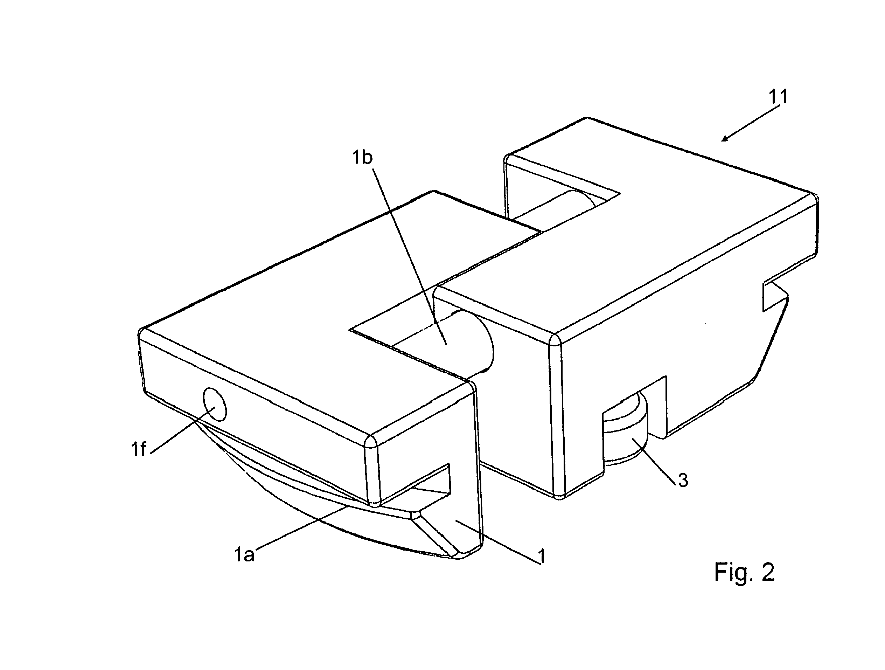

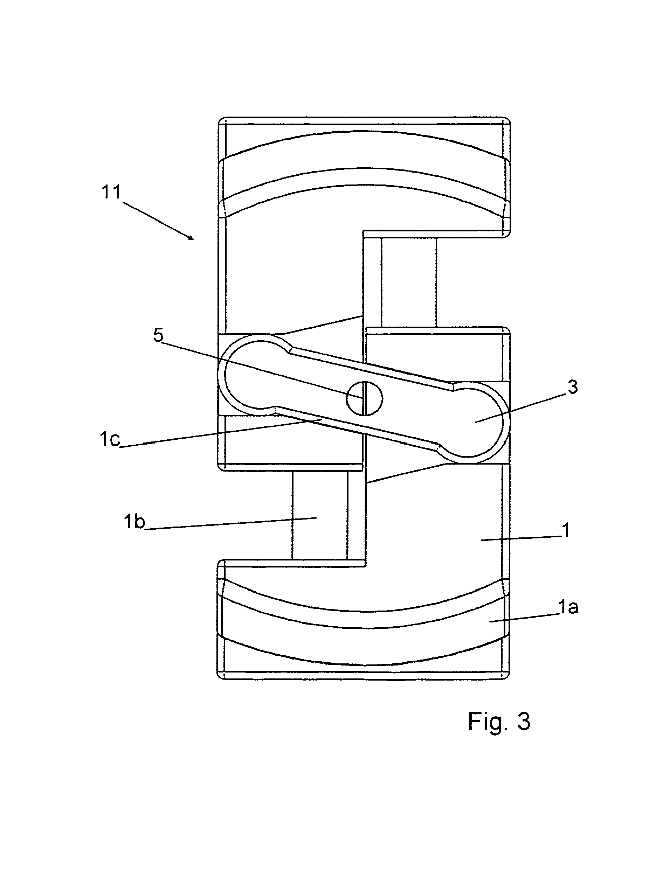

Die Figuren 1 bis 3 zeigen ein Rasthalteelement 11 nach einer ersten Ausführungsform der Erfindung aus unterschiedlichen Blickwinkeln. Das Rasthalteelement 11 weist zwei Rastschieber 1 auf, die jeweils eine Riegellasche 1a haben, an die sich ein in dieser Ausführungsform rohrförmiger Abstandshalter 1b zur Mitte des Rasthalteelements 11 anschließt. Die Rückstellmittel 2 sind als Druckfedern 2 ausgeführt, die an den Abstandhaltern 1b angeordnet sind. Die Rastschieber 1 sind im Winkel von 180° zueinander im Rasthalteelement 11 angeordnet und sind vorzugsweise identische Bauteile. An der Frontseite des Rastschiebers oberhalb der Riegellasche 1a befindet sich eine Bohrung 1f, die zum Einführen der Befestigungsmittel 7 (nicht in den Fig. 1 bis 3 dargestellt) zum Arretieren der Rastschieber 1 vorgesehen sind. Im unteren Bereich weisen die Rastschieber 1 eine Führung 1c für jeweils einen Arm 3b des Hebels 3 auf, wobei der Hebel 3 als Kopplungselement 3 der beiden Rastschieber 1 dient. Der Hebel 3 ist durch eine am Gehäuse (in Fig. 1 bis 3 nicht dargestellt) des Rasthalteelements 11 befestigte Schraube 5 drehbar gelagert.

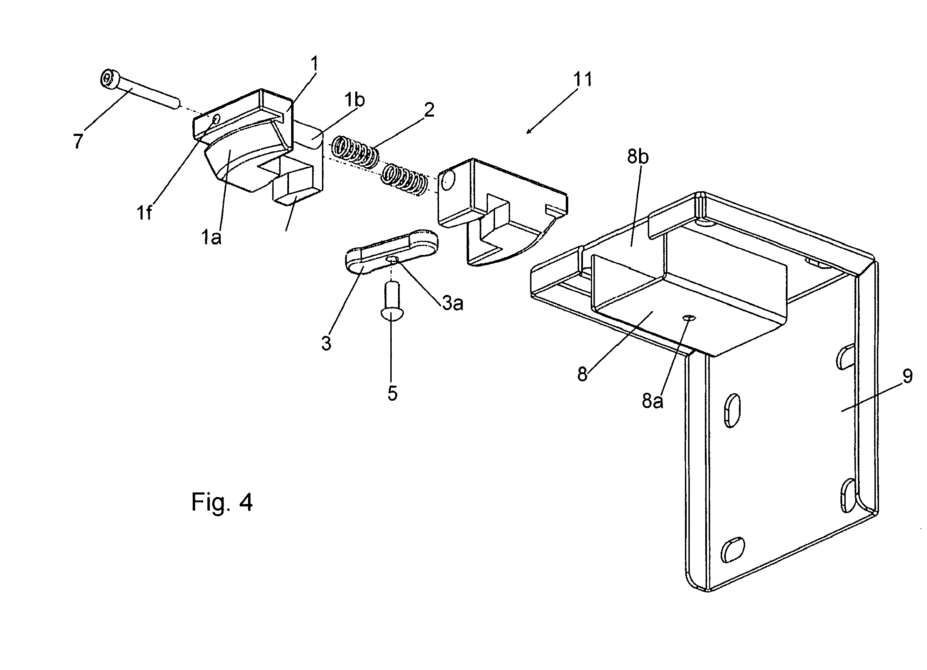

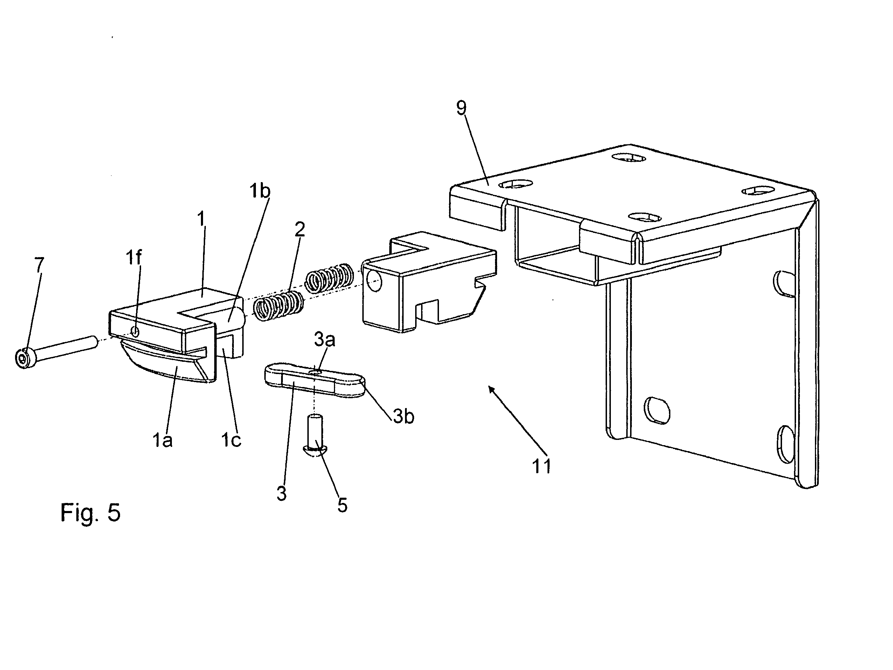

Die Figuren 4 und 5 zeigen das Rasthalteelement 11 nach der ersten Ausführungsform mit einem Wand- oder/und Deckenträger 9 in zwei Explosionsdarstellungen. Das Gehäuse 8 des Rasthalteelements 11 ist am Wand- oder/und Deckenhalter 9 befestigt. Die Befestigung kann durch Verschweißen, Verschrauben oder durch Formschluss hergestellt werden. Im Zentrum der Unterseite des Gehäuses 8 befindet sich eine Bohrung 8a, in die das Befestigungsmittel, wie zum Beispiel eine Schraube 5 für den Hebel 3 eingebracht werden kann. Nach vorn ist das Gehäuse 8 so am Wand- oder/und Deckenhalter angeordnet, dass das Rasthalteelement eingeschoben werden kann. Der Wand- oder/und Deckenhalter 9 und das Gehäuse 8 sind vorzugsweise aus Stahlblech oder Aluminiumblech hergestellt. Die Rastschieber und der Hebel sind bevorzugt aus Stahlguss, Aluminiumguss oder Kunststoff hergestellt.

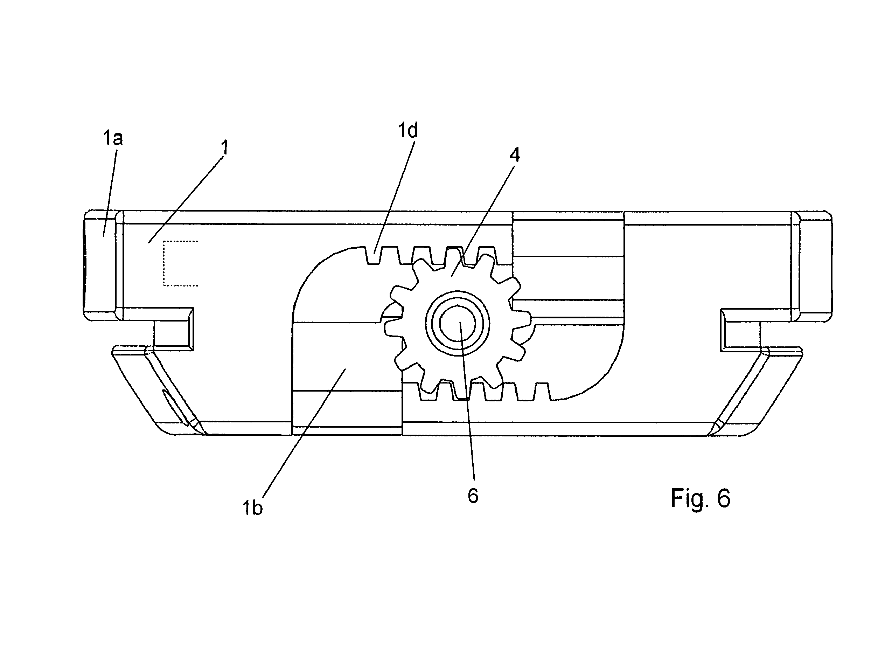

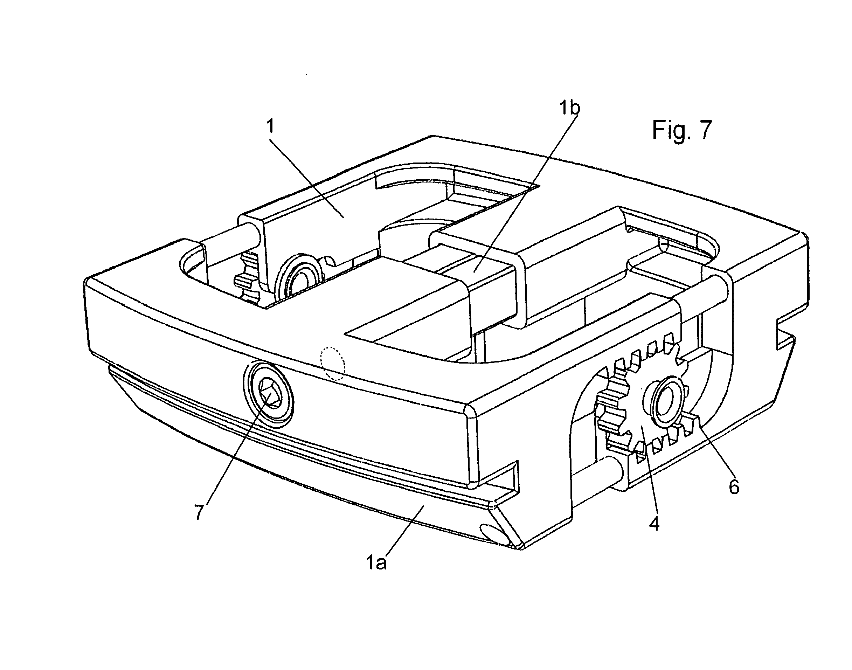

In den Figuren 6 und 7 ist ein Rasthalteelement 11 nach einer zweiten Ausführungsform der Erfindung dargestellt. In dieser Ausführungsform ist das Kopplungselement 2 nicht als Hebel sondern als eine Zahnrad 4 - Zahnstangenkombination 1d ausgeführt, wobei bei der zweiten Ausführungsform jeweils zwei Zahnrad-Zahnstangenkombinationen 1d, 4 vorliegen. Die Zahnräder 4 werden bei der zweiten Ausführungsform jeweils durch Niete 6 am Gehäuse 8 des Rasthalteelements 11 drehbar befestigt. Die Rückstellmittel 2 sind als Druckfedern (nicht in Fig. 6 und 7 dargestellt) in den Abstandhaltern 1b im mittleren Bereich der Oberseite des Rasthalteelements 11 angeordnet.

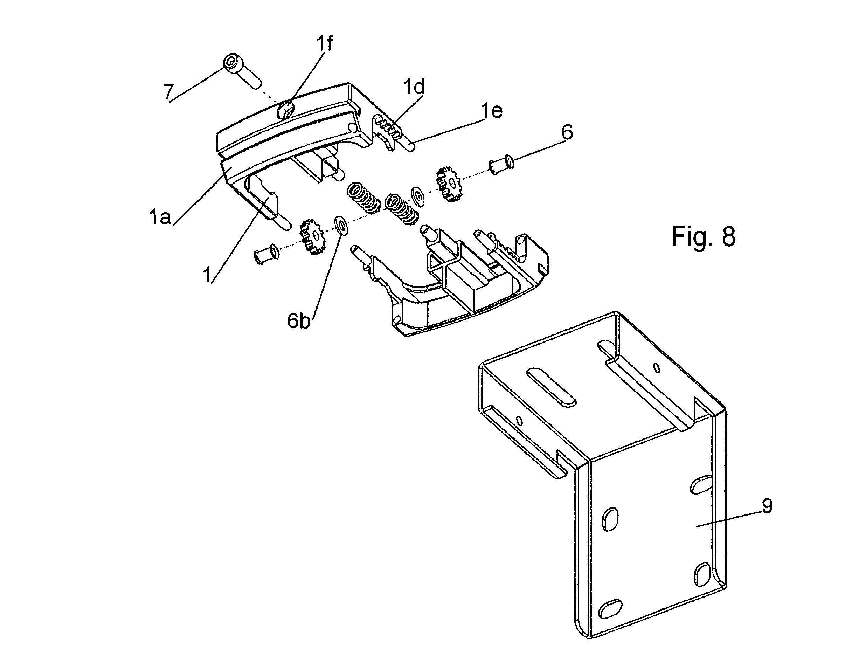

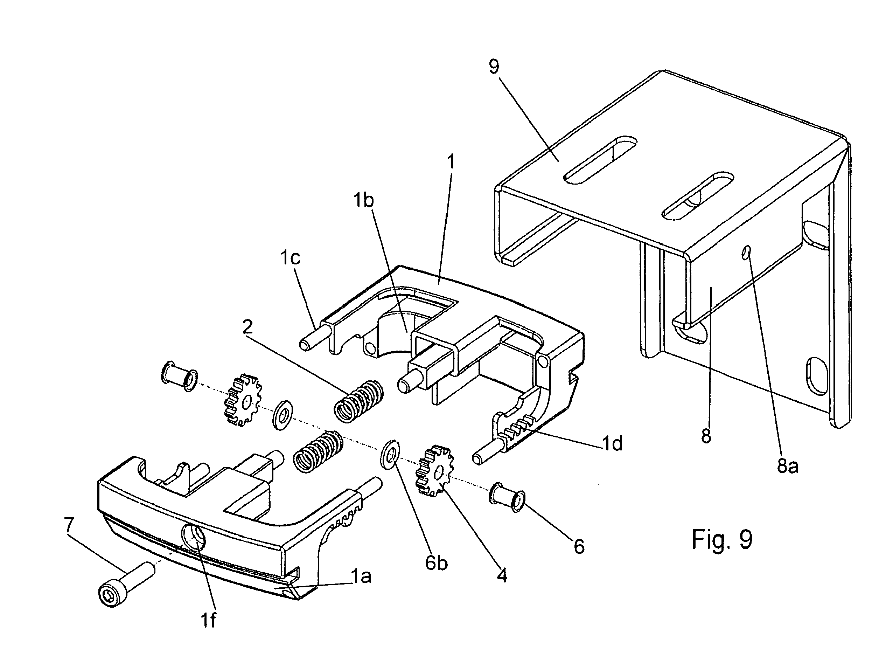

Die Figuren 8 und 9 zeigen Explosionsdarstellungen des Rasthalteelements 11 nach der zweiten Ausführungsform zusammen mit einem Wand- oder/und Deckenträger 9. Das Gehäuse 8 des Rasthalteelements 11 wird durch mehrfaches Umbiegen direkt in den Wand- oder/und Deckenträger eingearbeitet. An den Seiten des Gehäuses 8 befinden sich die Bohrungen 8a für die Niete 6 der Zahnräder 4. Das Gehäuse 8 ist zusammen mit den anderen Bestandteilen des Wand- oder/und Deckenhalters so angeordnet, dass das Rasthalteelement 11 von vorn in das Gehäuse eingeschoben werden kann und anschließend die Niete 6 in den Bohrungen 8a des Gehäuses zusammen mit den jeweiligen Zahnrädern 4 und einer Unterlegscheibe 6b vernietet werden. Auch bei der zweiten Ausführungsform sind die beiden Rastschieber 1 vorzugsweise einander gleich.

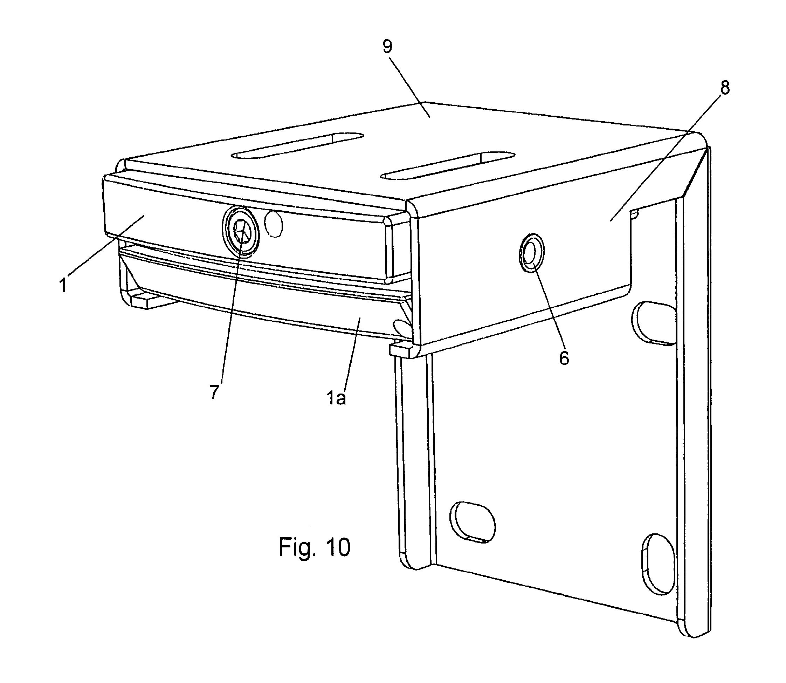

Die Figur 10 veranschaulicht, wie das Rasthalteelement 11 im Gehäuse 8 am Wand- oder/und Deckenhalter 9 im montierten Zustand angeordnet ist. Die Befestigung des Rasthalteelements 11 am Gehäuse 8 erfolgt durch die Niete 6 (nur ein Niet ist sichtbar). Wenn die Befestigung eines Bildwandsystems (nicht dargestellt) erfolgt ist, kann in eine Bohrung 1f oberhalb der vorderen Riegellasche 1a am Rastschieber beispielsweise eine Schraube 7 als Arretierungsmittel eingedreht werden.

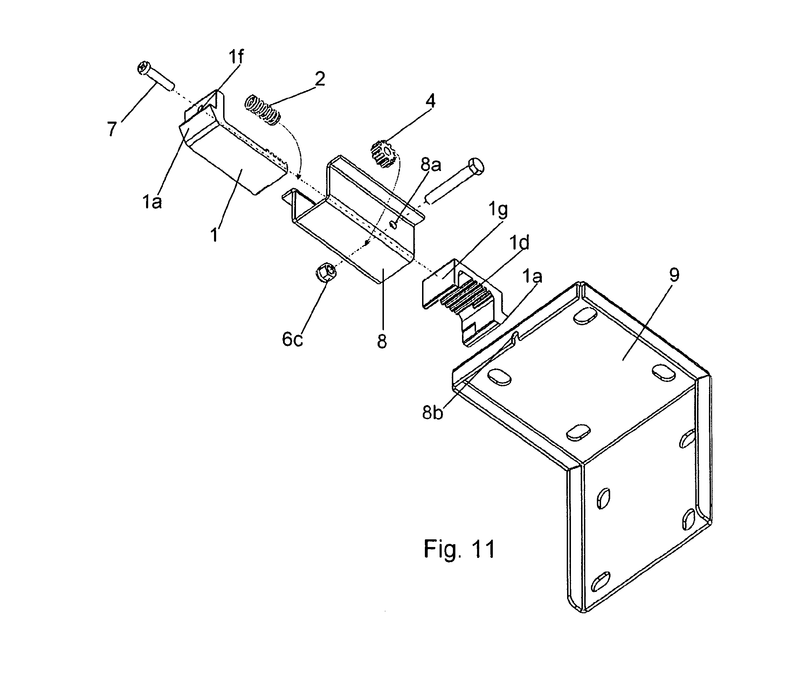

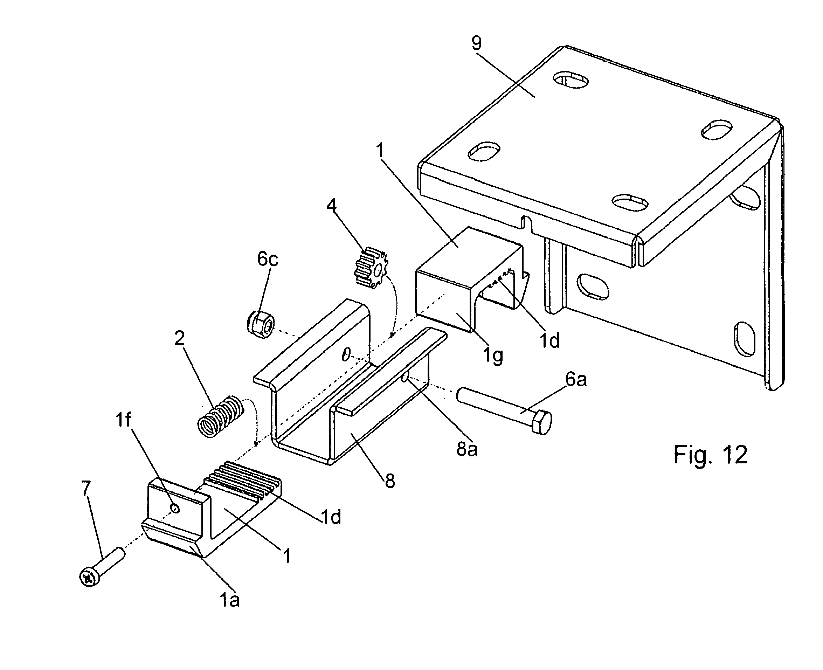

Anhand der Figuren 11 und 12 soll das Rasthalteelement 11 nach der dritten Ausführungsform der Erfindung näher erläutert werden. Wie bei der zweiten Ausführungsform weist das Rasthalteelement 11 ein Zahnrad 4 als Kopplungselement auf, wobei bei der dritten Ausführungsform lediglich ein Zahnrad 4 vorgesehen ist, welches auf einer aus einer Schraube 6a und einer Schraubenmutter 6c bestehenden Drehachse gelagert und am Gehäuse 8 befestigt ist. Die Arretierungsschraube 7 kann bei der dritten Ausführungsform auch als Führung für das Rückstellmittel 2 dienen. Einer der Rastschieber 1 weist eine Rückwand 1g für das Rückstellmittel 2 auf, wodurch die beiden Rastschieber 1a im Falle der dritten Ausführungsform sich nicht vollständig gleichen. Beide Rastschieber 1a weisen eine Zahnstange 1d auf, die über das Zahnrad 4 die Kopplung der beiden Rastschieber 1a bewirken. Das Gehäuse 8 des Rasthalteelements 11 wird beispielsweise durch Verschweißen, Verschrauben oder durch Formschluss am Wand- oder/und Deckenträger befestigt.

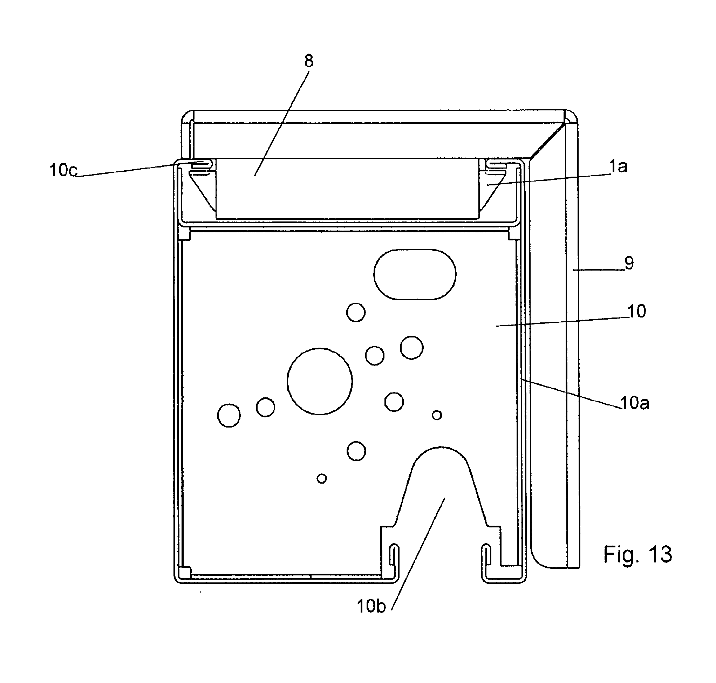

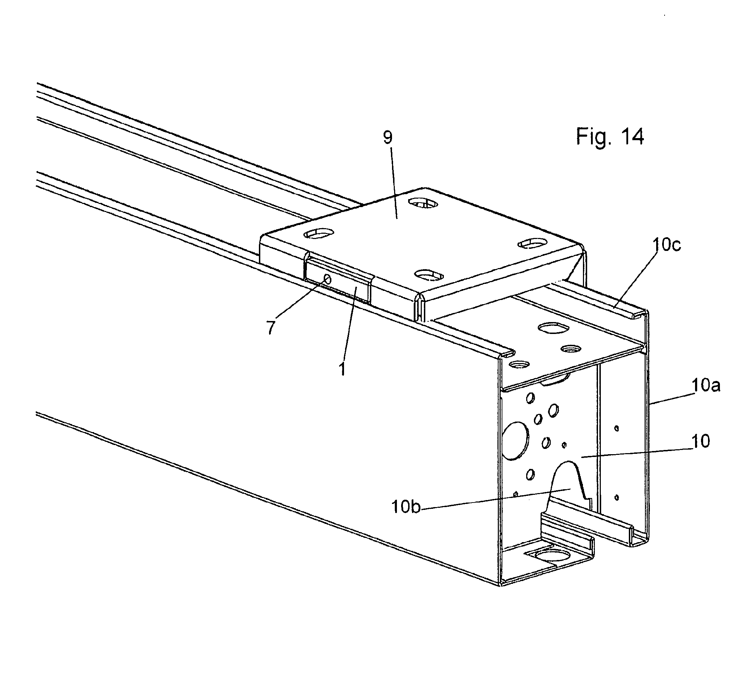

Die Figuren 13 und 14 zeigen, wie das Rasthalteelement 11 nach der ersten Ausführungsform nach Einrasten eines Bildwandsystems 10 angeordnet ist. Das Bildwandsystem 10 weist ein Gehäuse 10a auf, in dem sich an der Unterseite eine Öffnung 10b für die Bildwand befindet. Bei der dargestellten Ausführungsform sind die Schienen oder Führungen 10c, in die die Riegellaschen 1a des Rasthalteelements 11 eingreifen direkt in das Gehäuse des Bildwandsystems integriert, wobei ein doppelt umgebogenes U-Blech die Oberseite des Gehäuses 10a bildet, und zwei mehrfach umgebogene Bleche jeweils im oberen Bereich die Schiene bilden und sich im unteren Bereich bis zur Öffnung 10b der Bildwand erstrecken und mit der Öffnung 10b abschließen. Figur 14 zeigt, dass die Arretierungsschraube 7 nach eingerastetem Bildwandsystem 10 noch für die Arretierung des Rasthalteelements 11 zugänglich ist.

## Patentansprüche

1. Rasthalteelement (11) für die reversible Befestigung von Bauteilen, insbesondere für die Wand- oder Deckenmontage von Bildwandsystemen (10), welches zwei Rastschieber (1) mit jeweils einer Riegellasche (1a) und mindestens ein Rückstellmittel (2) aufweist, wobei die Rastschieber (1) zwischen einer geöffneten und einer geschlossenen Stellung verschiebbar sind, **dadurch gekennzeichnet,**
**dass** die Rastschieber (1) gegenläufig zueinander angeordnet sind und deren Bewegungen durch mindestens ein Kopplungselement (3, 4) miteinander gekoppelt sind, wobei durch eine Auslenkung eines Rastschiebers (1) über das mindestens eine Kopplungselement (3, 4) eine Auslenkung des anderen Rastschiebers (1) in entgegengesetzter Richtung bewirkbar ist und wobei durch die Auslenkungen Rückstellkräfte auf das mindestens eine Rückstellmittel (2) beaufschlagbar sind.

2. Rasthalteelement nach Anspruch 1,
**dadurch gekennzeichnet,**
**dass** als Kopplungselemente (3, 4) Hebel (3) mit Führung (1c) oder Zahnräder (4) mit Zahnstangen (1d) vorgesehen sind, wobei Führung (1c) bzw. Zahnstangen (1d) an den Rastschiebern (1) angeordnet sind und wobei vorzugsweise die Auslenkungen der Rastschieber (1) gleich lang sind.

3. Rasthalteelement nach Anspruch 2,
**dadurch gekennzeichnet,**
**dass** die Rastschieber (1) jeweils eine Führung (1c) für einen der Hebelarme (3b) bzw. eine Zahnstange (1d) aufweisen.

4. Rasthalteelement nach Anspruch 2 oder 3,
**dadurch gekennzeichnet,**
**dass** das Rasthalteelement (11) ein Gehäuse (8) aufweist, wobei vorzugsweise Hebel (3) bzw. Zahnräder (4) am Gehäuse (8) drehbar gelagert angeordnet sind und insbesondere wobei das Gehäuse (8) als Führung der Rastschieber (1) vorgesehen ist.

5. Rasthalteelement nach einem der vorangegangenen Ansprüche,
**dadurch gekennzeichnet,**
**dass** die Rastschieber (1) in der geschlossenen Stellung weiter beabstandet sind als in der geöffneten Stellung und dass die Rückstellmittel (2) in der geöffneten Stellung der Rastschieber eine Spannung aufweisen und in der geschlossenen Stellung der Rastschieber zumindest größtenteils entspannt sind.

6. Rasthalteelement nach Anspruch 5,
**dadurch gekennzeichnet,**
**dass** eine Arretierung der Rastschieber (1) in der geschlossenen Stellung vorgesehen ist, wobei für die Arretierung der Rastschieber (1) mindestens ein Befestigungsmittel (7), vorzugsweise eine Schraube (7) vorgesehen ist.

7. Rasthalteelement nach einem der vorangegangenen Ansprüche,
**dadurch gekennzeichnet,**
**dass** die beiden Rastschieber (1) gleich aufgebaut sind, wobei einer der Rastschieber (1) um 180° gedreht zum anderen Rastschieber (1) angeordnet ist.

8. Wand- oder/und Deckenträger (9) für die Montage eines Bildwandsystems (10),
**dadurch gekennzeichnet,**
**dass** der Wand- oder/und Deckenträger (9) mindestens ein Rasthalteelement (11) nach einem der Ansprüche 1 bis 7 zur Montage eines Bildwandsystems (10) durch Einrasten aufweist.

9. Wand- oder/und Deckenträger (9) nach Anspruch 8,
**dadurch gekennzeichnet,**
**dass** das Gehäuse (8) des Rasthalteelements (11) mit dem Wand- oder/und Deckenträger (9) verschweißt, verschraubt oder durch Formschluss verbunden ist.

10. Bildwandsystem (10),
**dadurch gekennzeichnet,**
**dass** das Bildwandsystem (10) an mindestens einem Wand- oder/und Deckenträger (9) nach Anspruch 8 oder 9 befestigt ist, wobei vorzugsweise am Bildwandsystem (10) angeordnete Schienen (10c) oder Führungen (10c) für ein formschlüssiges Eingreifen der Riegellaschen (1a) der Rasthalteelemente (11) vorgesehen sind.

11. Bildwandsystem nach Anspruch 10,
**dadurch gekennzeichnet,**
**dass** die Schienen oder Führungen (10c) in ein Gehäuse (10a) des Bildwandsystems (10) integriert sind.

12. Verfahren zur Montage eines Bildwandsystems (10) nach einem der Ansprüche 10 oder 11, mit den Schritten:
D. Wand- oder Deckenmontage von mindestens einem, vorzugsweise von zwei Wand- oder/und Deckenträgern (9),
E. Einrasten eines Bildwandsystems (10), welches am Gehäuse (10a) Schienen oder Führungen (10c) für ein Eingreifen der Riegellaschen (1a) der Rasthalteelemente (11) aufweist,
F. Arretieren der Rasthalteelemente (11) durch ein Befestigungsmittel (7), welches die Rastschieber (1a) arretiert.
